# EUROPEAN PATENT SPECIFICATION

(11) **EP 1 906 728 B1**
(45) Date of publication and mention of the grant of the patent: **22.03.2017**
(21) Application number: 06760855.4
(22) Date of filing: 14.07.2006
(51) Int. Cl.: A01M 23/30, A01M 23/20

(54) **CARDBOARD RODENT TRAP WITH SLIDING STRIKER**
FALLE FÜR NAGETIERE AUS PAPPE MIT GLEITSCHLAGBÜGEL
PIÈGE À RONGEURS EN CARTON AVEC GÂCHE COULISSANTE

(30) Priority: 14.07.2005 AU 2005903736
(43) Date of publication of application: 09.04.2008
(73) Proprietor: Bell, Richard Anthony, Greenbank, QLD 4124 (AU)
(72) Inventor: Bell, Richard Anthony, Greenbank, QLD 4124 (AU)
(74) Representative: Duxbury, Stephen
(86) International application number: PCT/AU2006/000993
(87) International publication number: WO 2007/006103

(56) References cited:
- WO-A1-90/04920
- US-A- 2 506 055
- US-A- 2 510 655
- US-A- 2 669 056
- US-A- 2 669 056
- US-A- 4 766 692

## Description

### FIELD OF THE INVENTION

This invention relates to a rodent trap. In particular, the invention resides in fibreboard rodent trap that is disposable and therefore will be described in this context. However, it should be appreciated that the rodent trap may be reused if desired and can be made from other suitable materials.

### BACKGROUND OF THE INVENTION

Rodents are pests that both destroy property and carry disease. They are prolific breeders and are intelligent. This makes them exceptionally difficult to control.

One of the simplest yet most effective ways of controlling rodents is through the use of rodent traps. The traditional rodent trap includes a wooden base attached to a spring-loaded striker. A retainer extends over the striker and is connected to a bait holder by pivoting the bait holder upwardly. When the bait holder is depressed, this releases the retainer and the striker is able to strike at the rodent.

However there are problems which associated with this style of trap. The setting of this trap is a very delicate task. The trap can be prematurely set off with any slight movement so placement of this trap requires care. Also the rodent can access the bait from any angle. If the rodent does not approach the trap from the front then the rodent is often able to escape from the trap. Further, when the rodent is killed by the trap, the rodent is often removed from the trap so that the trap can be re-used as it is not biodegradable. This can be unhygienic as a user often has to touch the dead and often decomposing rodent. Further, when the trap is ultimately discarded, it poses an environmental hazard as the trap is non-biodegradable.

In order to address the lack of biodegradability of the traditional rodent trap, a fibreboard rodent trap was developed as described in US Patent No. 4,366,642. The rodent trap works effectively if the rodent enters from the front of the trap. Unfortunately, the trap is difficult to erect and is not robust and also suffers from the same short comings as the traditional rodent trap as the rodent is often not killed if approached from the side of the trap.

Another trap is known from e.g. US2506055.

### OBJECT OF THE INVENTION

It is an object of the invention to overcome or alleviate one or more of the above disadvantages or provide the consumer with a useful or commercial choice.

### SUMMARY OF THE INVENTION

In one form, although not necessarily the broadest or only form, the invention resides in a rodent trap comprising:
a body having a viewing aperture ;
a depressible trip located below the viewing aperture;
a retainer operatively connected to the trip;
a striker including a carriage;
a pair of rails in which the carriage is able to slide, the rails located adjacent the viewing aperture;
a biasing member connected to the striker to move the carriage;
wherein the carriage is held in a set position by the retainer, the retainer releasing the carriage from the set position when the trip is depressed to allow the biasing member to move the carriage along the rails and across the viewing aperture.

### BRIEF DESCRIPTION OF THE DRAWINGS

An embodiment of the invention, by way of examples only, will be described with reference to the accompanying drawings in which:
FIG. 1A shows a perspective view of a rodent trap blank used to produce a rodent trap;
FIG. 1B shows a perspective view of the partially folded rodent trap blank of FIG. 1A;
FIG. 1C shows another perspective view of the partially folded rodent trap blank of FIG. 1A;
FIG. 1D shows a further perspective view of the partially folded rodent trap blank of FIG. 1A;
FIG. 2A shows a top perspective view of a rodent trap in a closed position according to an embodiment of the invention;
FIG. 2B shows a top perspective view of a rodent trap in a set position according to an embodiment of the invention;
FIG. 3A shows a bottom perspective view of a rodent trap in a closed position according to an embodiment of the invention;
FIG. 3B shows a bottom perspective view of a rodent trap in a set position according to an embodiment of the invention;
FIG. 4A shows side sectional view of the rodent trap in a closed position;
FIG. 4B shows a side sectional view of the rodent trap in a position between a closed position and a set position;
FIG. 4C shows a side sectional view of the rodent trap in a set position;
FIG. 4D shows a side sectional view of the rodent trap in a position between a closed position and a set position; and
FIG. 4E shows a side sectional view of the rodent trap in a position in which a rodent is captured.

### DETAILED DESCRIPTION OF THE PREFERRED EMBODIMENT

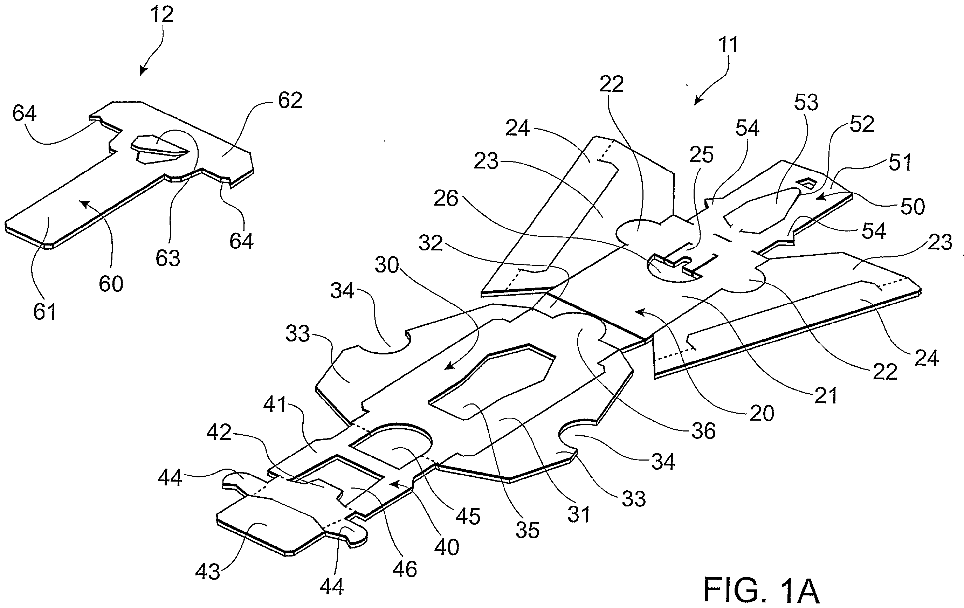

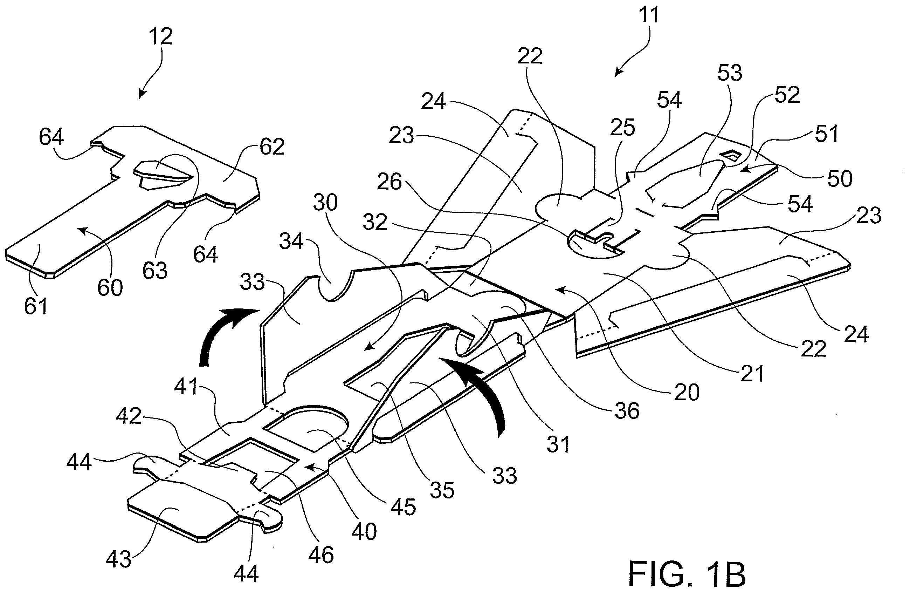

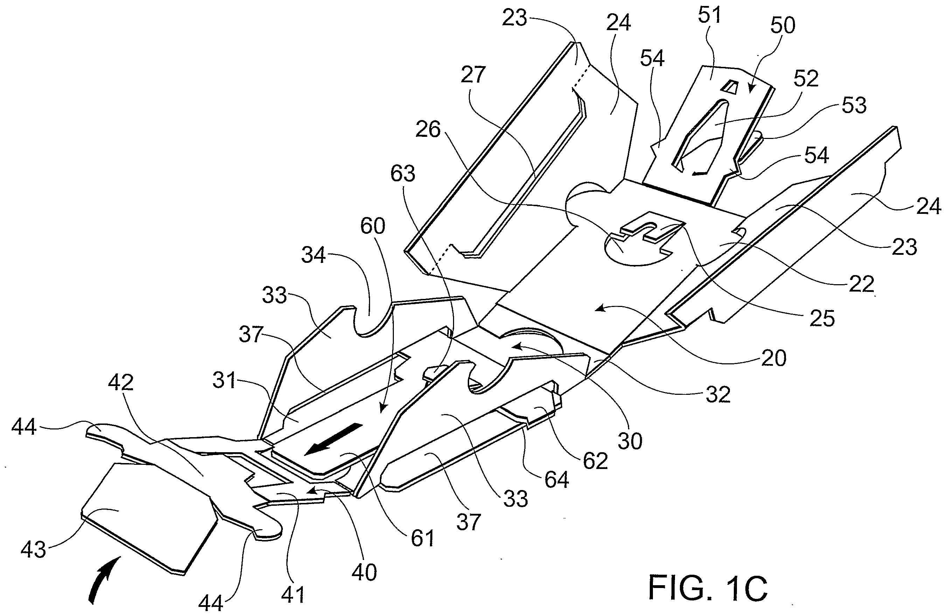

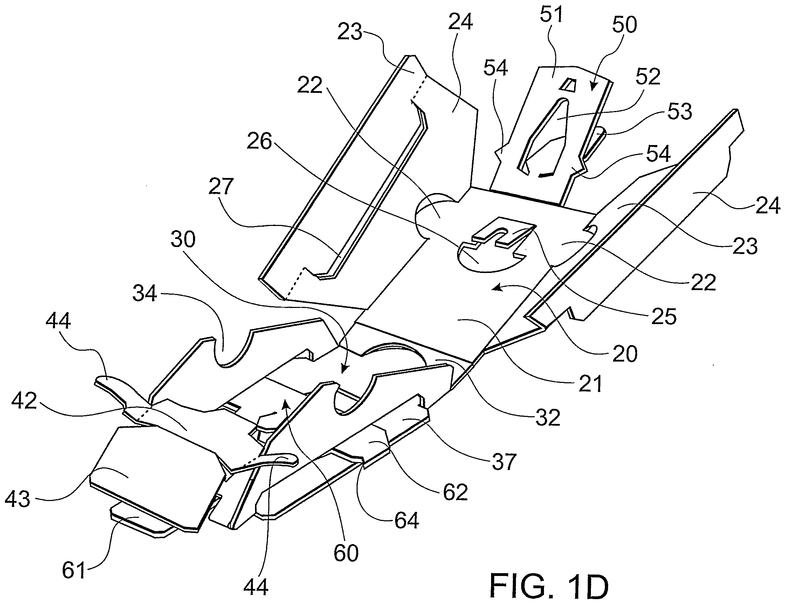

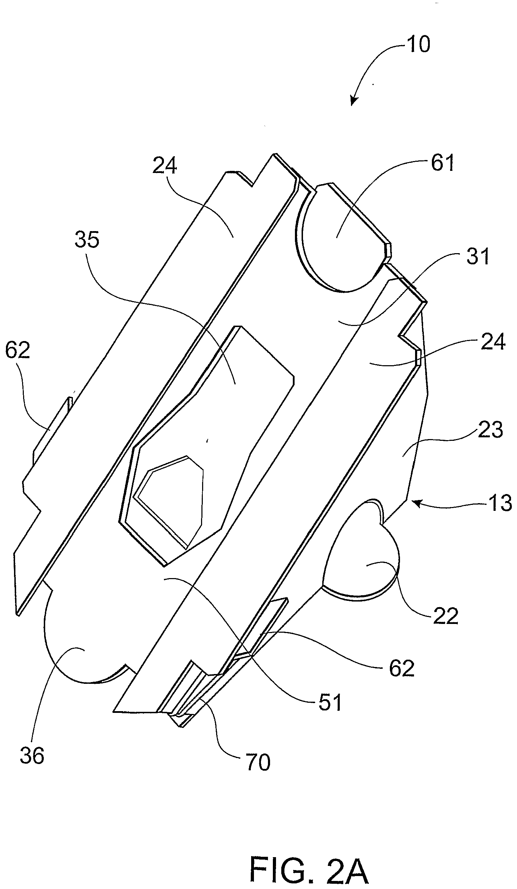

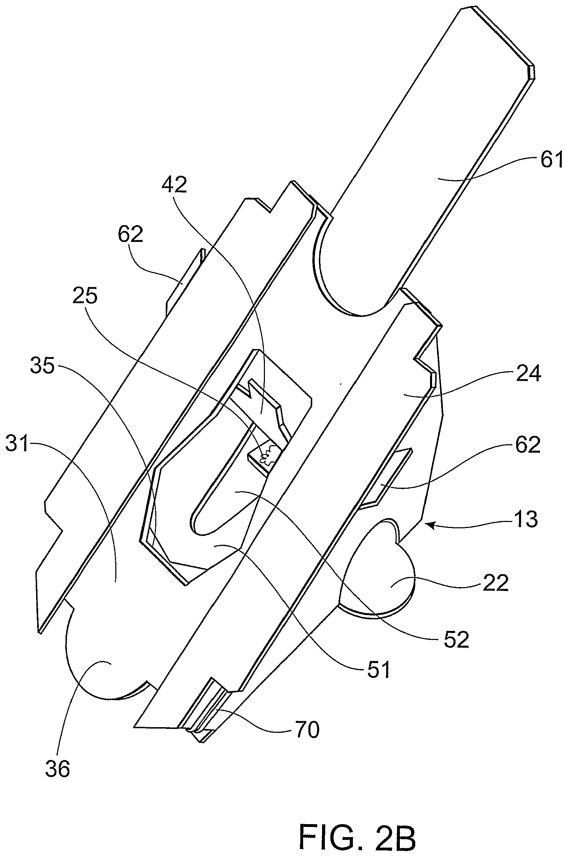

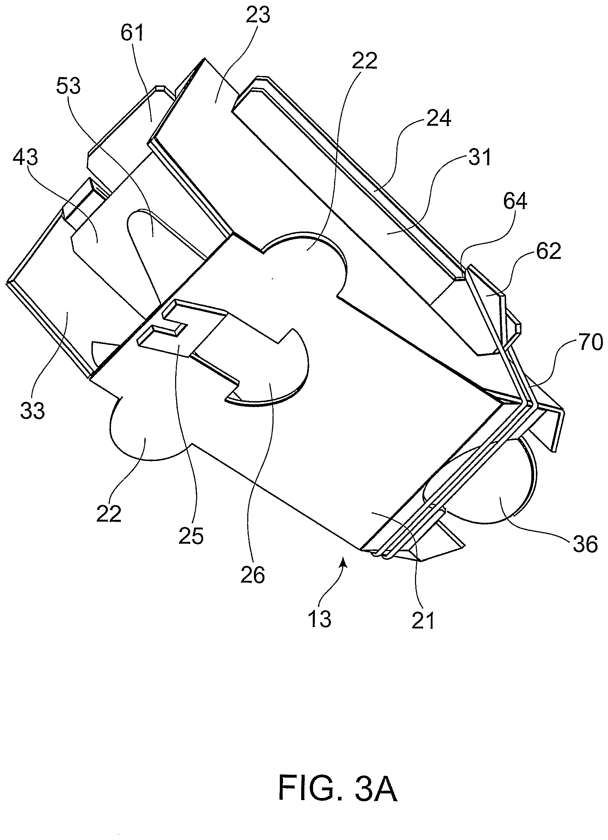

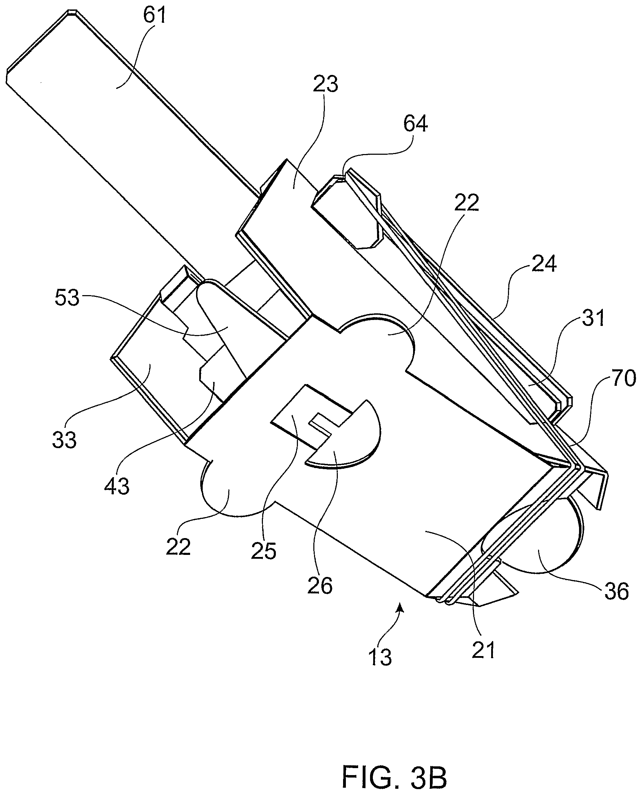

FIG. 1A shows a first and second rodent trap fibreboard blanks 11 and 12 that are used to produce the rodent trap 10 of FIGS. 2A to 3B. The first rodent trap fibreboard blank 11 is used to produce a body 13 and comprises a base 20, a top 30, an end 40 and a lever 50. The base 20 is pivotally connected to the lever 50 and the top 30, whilst the top 30 is also pivotally connected to the end 40. The second fibreboard blank 12 comprises a striker 60.

The base 20 includes a base plate 21, two stabilisers 22, two outer side walls 23, two top walls 24, a bait holder 25 and a loading aperture 26. The two side stabilisers 22 are located on the sides of the base plate 21. The two outer side walls 23 are pivotally connected to respective sides of the base plate 21. The two top 24 walls are pivotally connected to respective outer side walls 23. The bait holder 25 and loading aperture 26 are located adjacent the middle of the base plate 21. The bait holder 25 is pivotally connected to the base plate 21.

The top 30 is formed from a top plate 31, a connection plate 32, two inner side walls 33, two side wall apertures 34, a viewing aperture 35 and a hand tab 36. The top plate 31 is pivotally connected to the connection plate 32. The connection plate 32 is also pivotally connected to the base plate 21. Two inner side walls 33 are pivotally connected to respective sides of the top plate 31. Two side wall apertures 34 are located in the two inner side walls. A viewing aperture 35 is located adjacent the middle of the top plate 31. A hand tab 36 is located at an end of the top plate 31 and extends within the connection plate 32.

The end 40 is formed from an extension plate 41, a retainer plate 42, a biasing end plate 43, two latches 44, an extension aperture 45 and a striker aperture 46. The extension plate 41 is pivotally connected to the top plate 31. The retainer plate 42 is pivotally connected to the extension plate 41. The biasing plate 43 is pivotally connected to the retainer plate 42. Two latches 44 are pivotally connected to the retainer plate 42. The extension aperture 45 is located adjacent the end of the extension plate 41 and the end of the top plate 31. The striker aperture 46 is located within the extension plate 41.

The lever 50 is formed from a trip 51, a trip aperture 52, a biasing tongue 53 and two catches 54. The trip 51 is pivotally connected to the base plate 21. The trip aperture 52 is located within the trip 51. The biasing tongue 53 is located adjacent the middle of the trip 51 and is pivotally connected to the trip 51. Two catches 54 are located on respective sides of the trip 51.

The striker 60 is formed from a handle 61, a carriage 62, a setting tab 63 and two elastic band notches 64. The handle 61 is elongate and connected to the carriage 62. The setting tab 63 is located adjacent the connection between the handle 61 and the carriage 62 and is pivotally connected to the striker 60. The two elastic band notches 64 are located adjacent ends of the carriage 62.

To assemble the rodent trap 10 from the two fibre board blanks 11 and 12 are folded as shown in FIGS. 1A to 1D. The inner side walls 33 and extension plate 41 are pivoted with respect to the top plate 31. This causes two inner side rail apertures 37 to be formed between the two side walls 33 and the top plate 31. The striker 60 is placed adjacent the top plate 31 so that the carriage 62 extends through the two inner side rail apertures 37. The handle 61 is located through the extension aperture 45.

The trip 51 is then pivoted until it touches the base plate 21. The biasing tongue 53 is then pivoted until it touches the trip 51 and extends rearwardly from the trip 51.

The two latches 44 are pivoted with respect to the retainer plate 42 and are located adjacent respective two inner side walls 33. The biasing plate 43 is pivoted with respect to the retainer plate 42.

The connection plate 32 is pivoted with respect to the base plate 21 and the top plate 31 is pivoted with respect to the connection plate 32. This causes the biasing plate 43 to contact the biasing tongue 53.

The two top walls 24 are pivoted with respect to their respective two outer side walls 23 to form two outer side wall apertures 27. The two outer side walls 23 are pivoted with respect to the base plate 21 until they are located adjacent the two inner side walls 33. When the outer side walls 23 are located adjacent the inner side walls 23, the inner side wall apertures 37 and outer side wall apertures 27 are aligned. The carriage 62 hence also extends through the outer side wall apertures 27. Adhesive is placed on the top walls 24 and are then rotated until they contact the top plate 31. This adhesive application holds the rodent trap together.

A elastic band 70 is then placed around the connection plate 32 and over the carriage 62. The elastic band 70 is placed within the two elastic band notches 64. This completes the rodent trap as shown in FIGS. 2A to 3B.

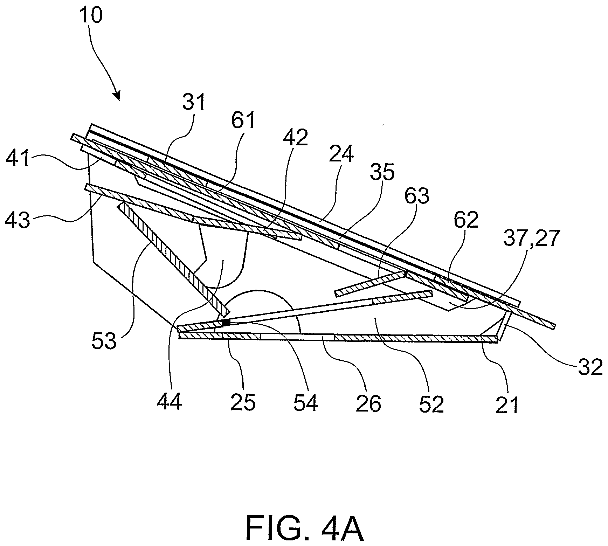

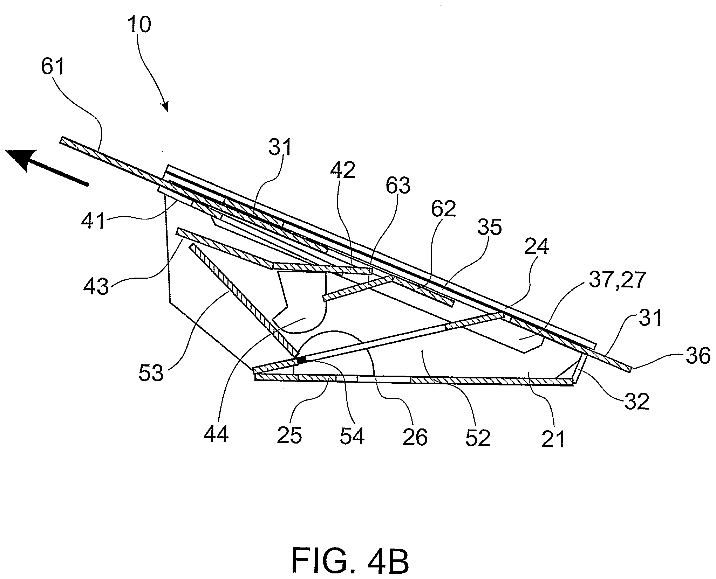

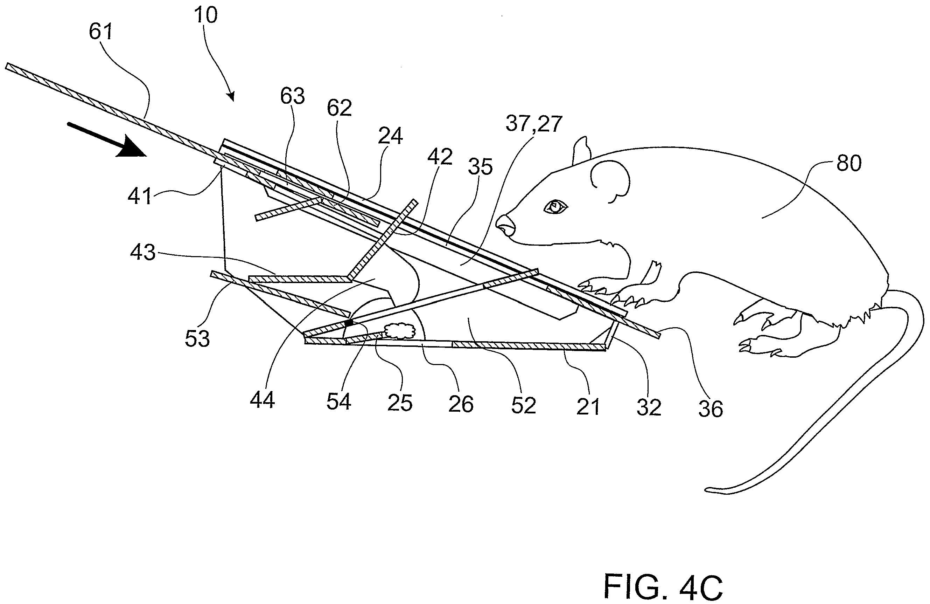

In use, the rodent trap 10 as shown in FIG. 4A is set by a user gripping the hand tab 36 and the handle 61, and thus pulling the handle 61. This causes the striker 60 to move within the two inner side rails 37 and the two outer side rails 27. As the striker 60 moves along the two inner side rails 37 and the two outer side rails 27, the setting tab 63 contacts the retainer plate 42 as shown in FIG. 4B. This causes the retainer plate 42 to rotate and causes the latches 44 to pass over their respective catches 54. The retainer plate 42 also causes the biasing plate 43 to push against the biasing tongue 53 and pivot the trip 51 upwardly. The latches 44 are then caught by the catches 54 and hold the retainer plate 42 in a set position. The striker 60 is held by the retainer plate 42 to complete the setting of the trap 10 as shown in FIG. 4C.

The rodent trap 10 is baited by rotating the bait holder 25, using the loading aperture 25, away from the base plate 21. Bait is then placed on the bait holder 25 and the bait holder 25 is then rotated toward the base plate 21. The trap 10 is then placed at a desired location. The two stabilisers 22 assist in preventing the rodent trap 10 from being turned over. The biasing plate 43 and biasing tongue 53 prevent a rodent gaining access to the bait from the rear of the rodent trap 10.

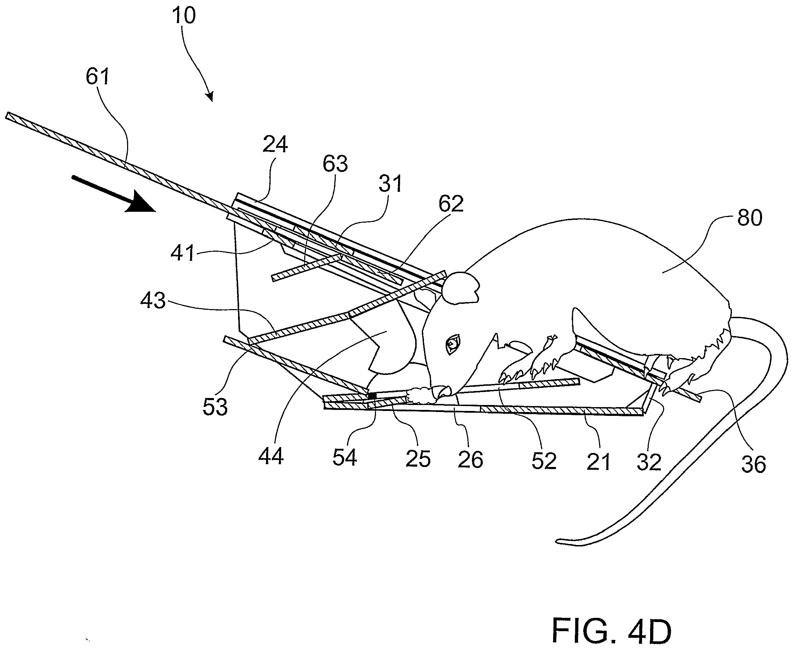

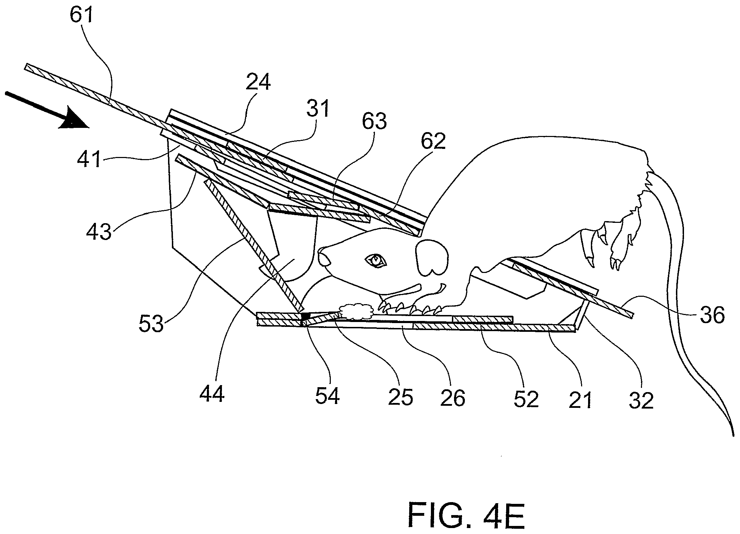

To activate the rodent trap, a rodent 80 places its head, upper torso and front legs through the viewing aperture 35. The trip aperture 52 enables the bait to be viewed and smelt easily by the rodent 80. The bait is positioned well inside the trap to entice the rodent 80 to place its feet onto the trip 51. The pressure of the rodent's body weight causes the trip 51 to be depressed toward the base plate 21 as shown in FIG. 4D. This causes the catches 54 to move downwardly and to release the latches 44. This causes the retainer plate 42 to be released and the elastic band 70 causes the striker 60 to be pulled across the viewing aperture 35. The carriage 62 of the striker 60 contacts the upper torso of the rodent 80 trapping the rodent 80 against the front edge of the viewing aperture 35 as shown in FIG. 4E. The rodent 80 is then killed either by crushing of the rodent's upper torso, neck and/or back or through suffocation. External evidence of the trauma is minimal. The trap, including the rodent, can then be thrown away. Alternatively the trap can be easily cleared without touching the rodent and reused.

The rodent trap is inexpensive, biodegradable and effective. The trap causes the rodent to be positioned so the likelihood of the rodent escaping the trap is greatly reduced. Further the trap can be set easily and is relatively safe to use as accidental placement of the fingers within the trap is unlikely.

It should be appreciated that though the above trap is made of fibreboard, other materials such as plastic may be used to produce the trap.

It should also be appreciated that various other changes and modification may be made. The scope of the invention is defined by the appended claims.

## Claims

1. A rodent trap (10) comprising:
a body (13) having a viewing aperture (35);
a depressible trip (51) located below the viewing aperture (35), the depressible trip (51) having two catches (54);
a retainer (42) operatively connected to the trip (51);
a striker (60) including a carriage (62);
a pair of rails (37) in which the carriage (62) is able to slide, the rails (37) located adjacent the viewing aperture (35);
a biasing member (70) connected to the striker (60) to pull the carriage (62);
wherein the carriage (62) is held in a set position by the retainer (42), the retainer (42) releasing the carriage (62) from the set position when the trip (51) is depressed, moving the catches (54) of the depressible trip (51) downward to allow the biasing member (70) to pull the carriage (62) along the rails (37) and across the viewing aperture (35).

2. The rodent trap of claim 1 wherein the body (13) includes
a base (20) connected to a top (30);
an end (40) connected to the top (30); and
a lever (50) connected to the base (20).

3. The rodent trap of claim 2 wherein the base (20) includes a pair of outer side walls (23) connected to a base plate (20) and respective top walls (24) connected to the outer side walls (23).

4. The rodent trap of claim 3 wherein a rail (37) is formed within each outer side wall (23).

5. The rodent trap of claim 2 wherein the base (20) includes a bait holder (25), or wherein the top (30) includes the viewing aperture (35).

6. The rodent trap of claim 2 wherein the top (30) includes at least one inner side wall (33) connected to a top plate (31), or wherein the end (40) includes the retainer (42).

7. The rodent trap of claim 1 wherein the retainer (42) is a retainer plate (42), preferably wherein at least one latch (44) is attached to the retainer (42).

8. The rodent trap of claim 6 wherein a biasing plate (43) is connected to the retainer plate (42).

9. The rodent trap of claim 2 wherein the lever (50) includes the trip (51), or wherein two catches (54) are located on respective sides of the trip (51), or wherein a biasing tongue (53) is attached to the trip (51).

10. The rodent trap of claim 1 wherein the striker (60) includes a handle (61) connected to the carriage (62), preferably wherein a setting tab (63) is located on the striker (60).

11. The rodent trap of claim 1 wherein the biasing member (70) is an elastic band (70).

12. The rodent trap of claim 1 when the rodent trap (10) is made from fibreboard blanks (11, 12).

## Patentansprüche

1. Nagetier-Falle (10) umfassend:
einen Körper (13) mit einer Sichtöffnung (35);
eine herunterdrückbare Auslösung (51), die unterhalb der Sichtöffnung (35) angeordnet ist, wobei die herunterdrückbare Auslösung zwei Fänge (54) aufweist,
einen Halter (42), der mit der Auslösung (51) zusammenwirkend verbunden ist;
ein Schlaggerät (60) mit einem Träger (62);
ein Paar Schienen (37), in denen der Träger (62) gleiten kann, wobei die Schienen (37) benachbart zu der Sichtöffnung (35) angeordnet sind;
ein Vorspannelement (70), das mit dem Schlaggerät (60) verbunden ist, um den Träger (62) zu beaufschlagen;
wobei der Träger (62) in einer festgelegten Position über den Halter (42) gehalten wird, wobei der Halter (42) den Träger (62) von der festgelegten Position freigibt, wenn die Auslösung (51) niedergedrückt wird, wobei die Fänge (54) der herunterdrückbaren Auslösung (51) nach unten bewegt werden, um es dem Vorspannelement (70) zu ermöglichen, den Träger (62) entlang der Schienen (37) und über die Sichtöffnung (35) zu ziehen.

2. Nagetier-Falle gemäß Anspruch 1, bei der der Körper (13) umfasst
eine Basis (20), die mit einer Oberseite (30) verbunden ist;
ein Ende (40,) das mit der Oberseite (30) verbunden ist; und
einen Hebel (50), der mit der Basis (20) verbunden ist.

3. Nagetier-Falle gemäß Anspruch 2, bei der die Basis (20) ein Paar von äußeren Seitenwänden (23) umfasst, die mit einer Basisplatte (20) verbunden sind und jeweilige obere Wände (24), die mit den äußeren Seitenwänden (23) verbunden sind.

4. Nagetier-Falle gemäß Anspruch 3, bei der eine Schiene (37) innerhalb jeder äußeren Seitenwand (23) ausgebildet ist.

5. Nagetier-Falle gemäß Anspruch 2, bei der die Basis (20) einen Köderhalter (25) umfasst, oder bei der die Oberseite (30) die Sichtöffnung (35) umfasst.

6. Nagetier-Falle gemäß Anspruch 2, bei der die Oberseite (30) wenigstens eine innere Seitenwand (33) umfasst, die mit einer oberen Platte (31) verbunden ist, oder bei der das Ende (40) den Halter (42) umfasst.

7. Nagetier-Falle gemäß Anspruch 1, bei der der Halter (42) als eine Rückhalteplatte (42) vorgesehen ist, wobei vorzugsweise wenigstens eine Lasche (44) an dem Halter (42) befestigt ist.

8. Nagetier-Falle gemäß Anspruch 6, bei der eine Vorspannplatte (43) mit der Rückhalteplatte (42) verbunden ist.

9. Nagetier-Falle gemäß Anspruch 2, bei der der Hebel (50) die Auslösung (51) umfasst, oder bei der zwei Fänge (54) an jeweiligen Seiten der Auslösung (51) angeordnet sind, oder bei der eine Vorspannzunge (53) an der Auslösung (51) befestigt ist.

10. Nagetier-Falle gemäß Anspruch 1, bei der das Schlaggerät (60) eine Handhabe (61) umfasst, die mit dem Träger (62) verbunden ist, bei der vorzugsweise ein Einstell-Tab (63) an dem Schlaggerät (60) angeordnet ist.

11. Nagetier-Falle gemäß Anspruch 1, bei der das Vorspannelement (70) als ein elastisches Band (70) vorgesehen ist.

12. Nagetier-Falle gemäß Anspruch 1, wobei die Nagetier-Falle (10) aus Faserplatten-Zuschnitten (11, 12) hergestellt ist.

## Revendications

1. Piège à rongeurs (10) comprenant :
un corps (13) ayant une ouverture de visualisation (35) ;
un déclencheur pouvant s'enfoncer (51) situé en dessous de l'ouverture de visualisation (35), le déclencheur pouvant s'enfoncer (51) comportant deux cliquets (54) ;
un élément de retenue (42) relié de manière opérationnelle au déclencheur (51) ;
une gâche (60) comprenant un chariot (62) ;
une paire de rails (37) dans lesquels le chariot (62) peut coulisser, les rails (37) étant adjacents à l'ouverture de visualisation (35) ;
un élément de sollicitation (70) relié à la gâche (60) pour tirer le chariot (62) ;
dans lequel le chariot (62) est maintenu dans une position définie par l'élément de retenue (42), l'élément de retenue (42) libérant le chariot (62) de la position définie lorsque le déclencheur (51) est enfoncé, déplaçant les cliquets (54) du déclencheur pouvant s'enfoncer (51) vers le bas pour permettre à l'élément de sollicitation (70) de tirer le chariot (62) le long des rails (37) et à travers l'ouverture de visualisation (35).

2. Piège à rongeurs selon la revendication 1, dans lequel le corps (13) comporte :
une base (20) reliée à une partie supérieure (30) ;
une extrémité (40) reliée à la partie supérieure (30) ; et
un levier (50) relié à la base (20).

3. Piège à rongeurs selon la revendication 2, dans lequel la base (20) comporte une paire de parois latérales externes (23) reliées à une plaque de base (20) et des parois supérieures (24) respectives reliées aux parois latérales externes (23).

4. Piège à rongeurs selon la revendication 3, dans lequel un rail (37) est formé à l'intérieur de chaque paroi latérale externe (23).

5. Piège à rongeurs selon la revendication 2, dans lequel la base (20) comporte un porte-appât (25), ou dans lequel la partie supérieure (30) comporte l'ouverture de visualisation (35).

6. Piège à rongeurs selon la revendication 2, dans lequel la partie supérieure (30) comporte au moins une paroi latérale interne (33) reliée à une plaque supérieure (31), ou dans lequel l'extrémité (40) comporte l'élément de retenue (42).

7. Piège à rongeurs selon la revendication 1, dans lequel l'élément de retenue (42) est une plaque de retenue (42), de préférence dans lequel au moins un verrou (44) est fixé à l'élément de retenue (42).

8. Piège à rongeurs selon la revendication 6, dans lequel une plaque de sollicitation (43) est reliée à la plaque de retenue (42).

9. Piège à rongeurs selon la revendication 2, dans lequel le levier (50) comporte le déclencheur (51), ou dans lequel deux cliquets (54) se trouvent sur les côtés respectifs du déclencheur (51), ou dans lequel une languette de sollicitation (53) est fixée au déclencheur (51).

10. Piège à rongeurs selon la revendication 1, dans lequel la gâche (60) comporte une poignée (61) reliée au chariot (62), de préférence dans lequel un onglet de configuration (63) se trouve sur la gâche (60).

11. Piège à rongeurs selon la revendication 1, dans lequel l'élément de sollicitation (70) est une bande élastique (70).

12. Piège à rongeurs selon la revendication 1, le piège à rongeurs (10) étant fabriqué à partir de découpes en carton (11, 12).
